# FASCICULE DE BREVET EUROPEEN

(11) **EP 1 432 907 B1**
(45) Date de publication et mention de la délivrance du brevet: **16.03.2005**
(21) Numéro de dépôt: 02783151.0
(22) Date de dépôt: 06.09.2002
(51) Int. Cl.: F02M 31/20, F02B 29/04

(54) **DISPOSITIF PERFECTIONNE DE REGULATION THERMIQUE DE L'AIR D'ADMISSION D'UN MOTEUR A COMBUSTION INTERNE DE VEHICULE AUTOMOBILE**
VERBESSERTE VORRICHTUNG ZUR THERMISCHEN STEUERUNG DER ANSAUGLUFT DES VERBRENNUNGSMOTORS EINES KRAFTFAHRZEUGS
IMPROVED DEVICE FOR THERMALLY CONTROLLING THE INTAKE AIR OF THE INTERNAL COMBUSTION ENGINE OF A MOTOR VEHICLE

(30) Priorité: 07.09.2001 FR 0111609
(43) Date de publication de la demande: 30.06.2004
(73) Titulaire: Peugeot Citroen Automobiles SA, 92200 Neuilly sur Seine (FR)
(72) Inventeur: AMARAL, Manuel, F-75015 Paris (FR)
(74) Mandataire: de la Bigne, Guillaume Michel Marie
(86) Numéro de dépôt international: PCT/FR2002/003043
(87) Numéro de publication internationale: WO 2003/023216

(56) Documents cités:
- EP-A- 1 111 217
- DE-A- 19 854 544
- GB-A- 2 055 963
- US-A- 4 236 492
- US-A- 4 317 439
- US-A- 5 394 854

## Description

La présente invention concerne un dispositif perfectionné de régulation thermique de l'air d'admission d'un moteur à combustion interne de véhicule automobile.

Elle s'applique en particulier à la régulation thermique de l'air d'admission d'un moteur suralimenté raccordé le cas échéant à une ligne d'échappement munie d'un filtre à particules.

On souhaite refroidir l'air d'admission d'un moteur notamment lorsque ce dernier est suralimenté au moyen d'un ensemble turbo-compresseur muni, d'une part, d'une turbine entraînée par des gaz d'échappement du moteur, agencée en aval du moteur, et d'autre part, d'un compresseur d'air d'admission agencé en amont du moteur. En effet, l'air d'admission du moteur, se réchauffant dans le compresseur, doit être refroidit à la sortie de ce compresseur afin d'optimiser les performances du moteur et minimiser les émissions de polluants.

Pour refroidir l'air d'admission du moteur, notamment à la sortie d'un compresseur d'un ensemble turbo-compresseur, on connaît déjà dans l'état de la technique un dispositif de régulation thermique de l'air d'admission d'un moteur à combustion interne de véhicule automobile, du type comprenant un premier échangeur thermique air d'admission/liquide caloporteur, destiné à réguler la température de l'air d'admission, raccordé à un circuit de liquide caloporteur dit froid.

Un tel dispositif de régulation thermique est décrit notamment dans US-A-4 096 697.

L'invention a notamment pour but d'optimiser le refroidissement de l'air d'admission du moteur, notamment à la sortie d'un compresseur d'un ensemble turbo-compresseur.

L'invention à pour objet un dispositif de régulation thermique de l'air d'admission d'un moteur à combustion interne de véhicule automobile émettant des gaz d'échappement en partie recirculés, du type décrit dans US-A-4 317 439 ou EP-A-1 111 217, comprenant:
- un premier échangeur thermique air d'admission/liquide caloporteur, destiné à réguler la température de l'air d'admission, raccordé à un circuit de liquide caloporteur dit froid, et
- un deuxième échangeur thermique air d'admission/fluide caloporteur, destiné également à réguler la température de l'air d'admission, raccordé à un circuit de liquide caloporteur dit très froid, plus froid que celui du circuit de liquide caloporteur froid,
**caractérisé en ce qu**'il comprend de plus un échangeur thermique gaz d'échappement recirculés/liquide caloporteur raccordé en dérivation au premier échangeur thermique air d'admission/liquide caloporteur.

Suivant des caractéristiques de différents modes de réalisation de ce dispositif :
- le circuit de liquide caloporteur froid comprend un échangeur thermique air/liquide caloporteur froid, dit échangeur basse température, porté de préférence par une face avant du véhicule automobile ;
- le liquide caloporteur est mis en circulation dans le circuit de liquide caloporteur froid par une pompe ;
- le fluide caloporteur circulant dans le deuxième échangeur thermique air d'admission/fluide caloporteur et le circuit de fluide caloporteur très froid est un liquide ;
- le fluide caloporteur circulant dans le deuxième échangeur thermique air d'admission/fluide caloporteur et le circuit de fluide caloporteur très froid est un fluide tel que du dioxyde de carbone CO₂ ou du Fréon destiné à circuler dans une pompe à chaleur ;
- le dispositif comprend une pompe à chaleur, le circuit de liquide caloporteur très froid étant couplé thermiquement avec une source froide de la pompe à chaleur ;
- le premier échangeur thermique air d'admission/liquide caloporteur et le deuxième échangeur thermique air d'admission/fluide caloporteur sont agencés dans un même module ;
- l'échangeur thermique gaz d'échappement recirculés/liquide caloporteur est également agencé dans le module ;
- le premier échangeur thermique air d'admission liquide/caloporteur est raccordé à un circuit de liquide caloporteur dit chaud, plus chaud que celui du circuit de liquide caloporteur froid, par l'intermédiaire de moyens de répartition des liquides caloporteurs froid et chaud dans le premier échangeur thermique air d'admission/liquide caloporteur ;
- le circuit de liquide caloporteur chaud est raccordé à un circuit de refroidissement du moteur à combustion interne ;
- le circuit de liquide caloporteur chaud est couplé thermiquement à une source chaude de pompe à chaleur ;
- les moyens de répartition comprennent une vanne de répartition, à au moins trois voies, comprenant une première voie d'entrée de liquide caloporteur raccordée au circuit de liquide caloporteur froid, une deuxième voie d'entrée de liquide caloporteur raccordée au circuit de liquide caloporteur chaud et une troisième voie de sortie de liquide caloporteur raccordée à une entrée de liquide caloporteur dans le premier échangeur thermique air d'admission/liquide caloporteur ;
- la troisième voie de la vanne de répartition est raccordée à la fois à l'entrée de liquide caloporteur dans l'échangeur thermique air d'admission/liquide caloporteur et à une entrée de liquide caloporteur dans l'échangeur thermique gaz d'échappement recirculés/liquide caloporteur, par un conduit commun aux circuits de liquide caloporteur froid et chaud ;
- les moyens de répartition comprennent une vanne de réglage du débit de liquide caloporteur dans l'échangeur thermique gaz d'échappement recirculés/liquide caloporteur reliant le conduit commun et l'entrée de cet échangeur thermique d'échappement recirculés/liquide caloporteur ;
- l'air d'admission est entraîné, à une pression supérieure à la pression atmosphérique, à travers le premier échangeur thermique air d'admission/liquide caloporteur et le deuxième échangeur thermique air d'admission/fluide caloporteur par un ensemble turbo-compresseur muni d'une turbine entraînée par des gaz d'échappement du moteur à combustion interne ;
- le moteur à combustion interne, de préférence de type Diesel, est raccordé à une ligne d'échappement munie d'un filtre à particules ;
- le liquide caloporteur est un mélange d'eau et d'antigel ;
- le deuxième échangeur thermique air d'admission/fluide caloporteur est agencé en aval du premier échangeur thermique classique air d'admission/liquide caloporteur, en considérant le sens d'écoulement de l'air d'admission.

L'invention sera mieux comprise à la lecture de la description qui va suivre, donnée uniquement à titre d'exemple et faite en se référant aux dessins dans lesquels :
- la figure 1 est vue schématique d'un moteur à combustion interne raccordé à des moyens amont formant circuit d'admission d'air et à des moyens aval formant ligne d'échappement ;
- les figures 2 et 3 sont des vues schématiques de dispositifs de régulation thermique de l'air d'admission du moteur selon respectivement, un mode de réalisation non revendiqué et un mode de réalisation selon l'invention;
- la figure 4 est une vue schématique d'une pompe à chaleur susceptible d'être couplée thermiquement à au moins un des circuits du dispositif de régulation thermique selon l'invention.

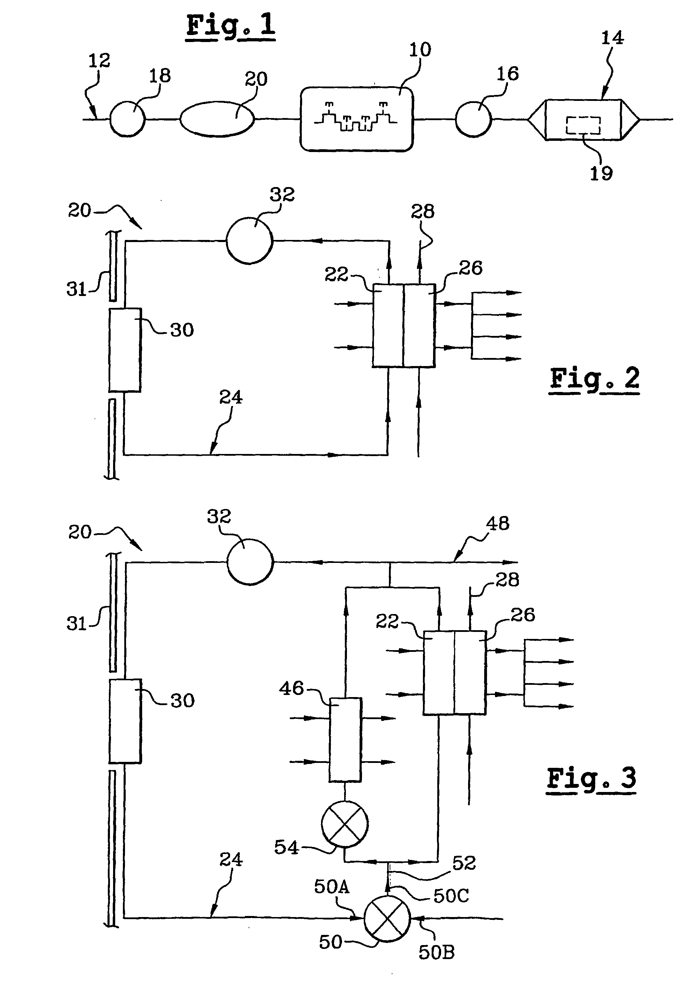

On a représenté sur la figure 1 un moteur à combustion interne 10 de véhicule automobile, par exemple de type Diesel, raccordé à des moyens amont formant un circuit 12 d'admission d'air dans le moteur 10 et à des moyens aval formant une ligne d'échappement 14.

Le moteur 10 est suralimenté au moyen d'un ensemble turbo-compresseur muni, d'une part, d'une turbine 16 entraînée par des gaz d'échappement du moteur 10, agencée en aval du moteur 10 dans la ligne d'échappement 14, et d'autre part, d'un compresseur 18 d'air d'admission agencé en amont du moteur 10 dans le circuit 12 d'admission d'air. La turbine 16 et le compresseur 18 sont couplés en rotation entre eux de façon connue en soi.

La ligne d'échappement est munie d'un filtre à particules classique 19.

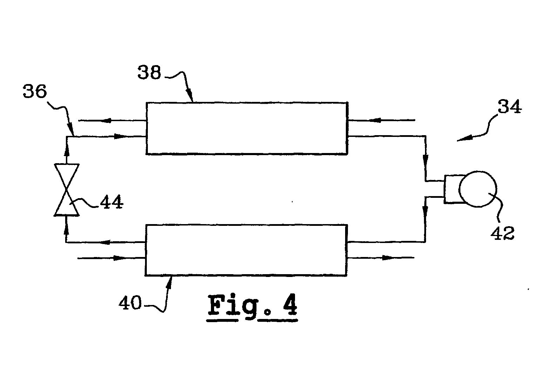

La température de l'air d'admission sortant du compresseur 18 est régulée au moyen d'un dispositif 20 de régulation thermique selon l'invention dont deux modes de réalisation sont représentés sur les figures 2 et 3. On notera que sur ces figures les éléments analogues sont désignés par des références identiques.

Dans ce qui suit, deux organes sont dits couplés thermiquement entre eux lorsqu'ils échangent de la chaleur entre eux au moyen d'un échangeur thermique approprié.

Sur la figure 2, on a représenté un dispositif 20 de régulation thermique de l'air d'admission selon un mode de réalisation non revendiqué.

Le dispositif 20 comprend un premier échangeur thermique classique 22 air d'admission/liquide caloporteur destiné à réguler la température de l'air d'admission à sa sortie du compresseur 18. Ce premier échangeur 22 est raccordé à un circuit 24 de liquide caloporteur dit froid, destiné à refroidir l'air d'admission.

Le dispositif 20 comprend également un deuxième échangeur thermique classique 26 air d'admission/liquide caloporteur, destiné également à réguler la température de l'air d'admission. Ce deuxième échangeur 26 est raccordé à un circuit 28 de liquide caloporteur dit très froid, plus froid que celui du circuit 24 de liquide caloporteur froid.

L'air d'admission est entraîné à travers les premier 22 et deuxième 26 échangeurs thermiques air d'admission/liquide caloporteur à une pression supérieure à la pression atmosphérique par le compresseur 18. Le flux d'air d'admission traversant ces échangeurs 22, 26 est représenté sur la figure 2 par des flèches orientées de gauche à droite.

On notera que le deuxième échangeur thermique 26 air d'admission/liquide caloporteur est agencé en aval du premier échangeur thermique classique 22 air d'admission/liquide caloporteur, en considérant le sens d'écoulement de l'air d'admission.

En variante, le deuxième échangeur thermique 26 air d'admission/liquide caloporteur pourrait être agencé en amont du premier échangeur thermique classique 22 air d'admission/liquide caloporteur, en considérant le sens d'écoulement de l'air d'admission.

Le circuit 24 de liquide caloporteur froid comprend un échangeur thermique classique 30 air extérieur au véhicule/liquide caloporteur froid, dit échangeur basse température, porté de préférence par une face avant 31 du véhicule automobile. Le liquide caloporteur froid est mis en circulation dans le premier circuit 24 par une pompe électrique classique 32.

Sur la figure 4, on a représenté une pompe à chaleur 34, destinée par exemple à la climatisation de l'habitacle du véhicule, comportant un circuit 36 de fluide frigorigène, de type à compression, prélevant des calories d'une source froide 38 pour les transférer au moins partiellement vers une source chaude 40. Le fluide frigorigène est d'un type classique tel qu'un dérivé chloré et fluoré du méthane ou de l'éthane (Fréon), de l'ammoniac, du dioxyde de carbone, etc.

Les sources froide 38 et chaude 40 sont raccordées entre elles par un compresseur 42 et une vanne de détente 44. Le fluide frigorigène se vaporise en enlevant de la chaleur à la source froide 38. Le compresseur 42 aspire le fluide vaporisé et le refoule vers la source chaude où il se condense en refroidissant. La vanne de détente 44 laisse passer le fluide frigorigène liquide vers la source froide 38 en abaissant sa pression. Le sens de circulation du fluide frigorigène dans le circuit 36 est indiqué par des flèches sur la figure 4.

Le circuit 28 de liquide caloporteur très froid est, par exemple, couplé thermiquement, directement ou indirectement, à la source froide 38 de la pompe à chaleur 34.

Le liquide caloporteur circulant dans chacun des circuit de liquide caloporteur froid 24 et très froid 28 est de type classique et comprend par exemple un mélange d'eau et d'antigel.

De préférence, les premier 22 et deuxième 26 échangeurs thermiques air d'admission/liquide caloporteur sont agencés dans un même module.

On décrira ci-dessous certains aspects essentiels du fonctionnement du dispositif de régulation thermique 20 selon le mode de réalisation illustré sur la figure 2.

Comme cela ressortira de la description de ce fonctionnement, les premier 22 et deuxième 26 échangeurs thermiques air d'admission/liquide caloporteur forment des moyens de refroidissement étagé de l'air d'admission.

Le deuxième échangeur thermique 26 air d'admission/liquide caloporteur, raccordé au circuit 28 de liquide caloporteur très froid, permet d'optimiser le fonctionnement du moteur suralimenté 10, plus particulièrement quand ce moteur 10 fournit un couple élevé, par exemple, lorsque le véhicule monte une côte, ou bien quand ce moteur 10 est en régime d'accélération.

En considérant initialement que l'air ambiant, environnant le véhicule, est à une température de 25°C, cet air, aspiré par le compresseur, atteint, à la sortie de ce compresseur 18 une température d'environ 150°C.

L'air d'admission à la température de 150°C est refroidi, tout d'abord, par le premier échangeur 22 air d'admission/liquide caloporteur raccordé à l'échangeur basse température 30 par le circuit 24 de liquide caloporteur froid. A la sortie de ce premier échangeur 22, la température de l'air d'admission est d'environ 50°C. Ce dernier traverse ensuite le deuxième échangeur 26 air d'admission/liquide caloporteur raccordé au circuit 28 de liquide caloporteur très froid.

En considérant que le circuit 28 de liquide caloporteur très froid est couplé thermiquement à la source froide 38 de la pompe à chaleur, la température de l'air d'admission à la sortie du deuxième échangeur 26 peut atteindre environ 20°C.

Dans l'exemple ci-dessus, l'air est admis dans le moteur 10 à une température (20°C) inférieure à celle de l'air ambiant (25°C) ce qui permet d'améliorer les performances du moteur. On observe que 10°C gagné sur la température de l'air d'admission permet un gain de 3% de la performance d'un moteur de type Diesel ou essence.

On notera que la puissance échangée au niveau du deuxième échangeur 26 air d'admission/liquide caloporteur est relativement faible (environ 2 kW). Cette puissance peut être obtenue au moyen d'un deuxième échangeur 26 de dimension relativement réduite dans la direction du sens d'écoulement du flux d'air d'admission. Cet échangeur thermique 26, peu encombrant, a donc un effet limité sur les pertes de charge subies par le flux d'air.

En général, le compresseur 42 de la pompe à chaleur 34 (comportant une source froide 38 couplée thermiquement avec le circuit 28 de liquide caloporteur très froid) est couplé à l'arbre du moteur 10.

Le fonctionnement de la pompe à chaleur 34 diminue donc les performances mécaniques du moteur. Toutefois, le bilan énergétique global reste positif. En effet, à un gain de 30°C sur l'air d'admission correspond un gain net de 7% de la performance mécanique de l'arbre du moteur 10.

Le premier échangeur thermique 22 air d'admission/liquide caloporteur est utilisé à sa puissance maximale pour abaisser la température de l'air d'admission jusqu'à 50°C conformément à l'exemple ci-dessus. Le deuxième échangeur thermique 26 air d'admission/liquide caloporteur, en série avec le premier échangeur thermique 22, permet d'abaisser encore la température de l'air d'admission de façon à obtenir le fonctionnement optimisé du moteur.

Sur la figure 3, on a représenté un dispositif 20 de régulation thermique de l'air d'admission selon un mode de réalisation de l'invention.

Dans certains types de moteur, une partie des gaz d'échappement est remise en circulation avec l'air d'admission à l'aide de moyens classiques appropriés. Ces gaz d'échappement sont communément appelés gaz d'échappement recirculés EGR (Exhaust Gaz Recycling). Ces derniers, mélangés avec l'air d'admission à l'aide de moyens classiques appropriés, sont renvoyés vers le moteur 10.

Le dispositif 20 de régulation thermique de l'air d'admission selon le mode de réalisation représenté sur la figure 3 permet de réguler la température des gaz d'échappement recirculés dans le but notamment d'abaisser la température de ces gaz avant d'être mélangés à l'air d'admission et renvoyés vers le moteur 10.

A cet effet, un échangeur thermique 46 gaz d'échappement recirculés/liquide caloporteur est raccordé en dérivation au premier échangeur thermique 22 air d'admission/liquide caloporteur. Le flux de gaz d'échappement recirculés traversant l'échangeur thermique 46 est représenté sur la figure 3 par des flèches orientées de gauche à droite.

De préférence, l'échangeur thermique 46 gaz d'échappement recirculés/liquide caloporteur est également agencé dans le module regroupant les premier 22 et deuxième 26 échangeurs thermiques air d'admission/liquide caloporteur.

Par ailleurs, le dispositif 20 de régulation thermique de l'air d'admission selon le mode de réalisation de l'invention permet aussi bien de refroidir cet air d'admission que de le réchauffer.

En effet, on souhaite réchauffer l'air d'admission d'un moteur notamment lorsque ce dernier est raccordé à une ligne d'échappement munie d'un filtre à particules. Ce filtre doit être régénéré périodiquement afin d'éliminer les particules de suie qui s'y accumulent. La régénération est réalisée par chauffage de l'air d'admission jusqu'à une température suffisante pour provoquer la combustion des particules de suie.

Le premier échangeur thermique 22 air d'admission/liquide caloporteur est raccordé à un circuit 48 de liquide caloporteur dit chaud, destiné à réchauffer l'air d'admission, par l'intermédiaire de moyens de répartition des liquides caloporteurs froid et chaud dans l'échangeur 22.

Le liquide caloporteur circulant dans le circuit 48 de liquide caloporteur chaud est de type classique et comprend par exemple un mélange d'eau et d'antigel.

Les moyens de répartition comprennent une vanne de répartition trois voies classique 50, par exemple de type tout ou rien ou de type proportionnel, comprenant :
- une première voie d'entrée de liquide caloporteur 50A raccordée au circuit 24 de liquide caloporteur froid,
- une deuxième voie d'entrée de liquide caloporteur 50B raccordée au circuit 48 de liquide caloporteur chaud et
- une troisième voie de sortie de liquide caloporteur 50C raccordée à la fois à une entrée de liquide caloporteur dans le premier échangeur thermique 22 air d'admission/liquide caloporteur et à une entrée de liquide caloporteur dans l'échangeur thermique 46 gaz d'échappement recirculés/liquide caloporteur, par un conduit 52 commun aux circuits de liquide caloporteur froid 24 et chaud 48.

Le circuit 48 de liquide caloporteur chaud est raccordé, par exemple, à un circuit classique de refroidissement du moteur 10, non représenté sur les figures. En variante, ce circuit 48 de liquide caloporteur chaud peut être couplé thermiquement, directement ou indirectement, à la source chaude 40 de la pompe à chaleur 34.

Une vanne 54 de réglage du débit de liquide caloporteur dans l'échangeur thermique 46 gaz d'échappement recirculés/liquide caloporteur relie le conduit commun 52 à l'entrée de cet échangeur thermique 46. La vanne de réglage 54 est de type classique, par exemple de type tout ou rien ou de type proportionnel.

On décrira ci-dessous certains aspects essentiels du fonctionnement du dispositif de régulation thermique 20 selon le mode de réalisation de l'invention illustré sur la figure 3.

Pour refroidir, d'une part, les gaz d'échappement recirculés, et d'autre part, l'air d'admission à la sortie du compresseur 18, la vanne de réglage 54 est ouverte et la vanne de répartition 50 est réglée de façon à raccorder le premier échangeur thermique 22 air d'admission/liquide caloporteur au circuit 24 de liquide caloporteur froid. Le débit de liquide caloporteur froid traversant l'échangeur basse température 30 est régulé par la pompe 32.

La répartition des débits de liquide caloporteur dans chacun des échangeurs 22, 46 peut être réglée en réglant la vanne 54.

Le liquide caloporteur circulant dans le premier échangeur 22 refroidit l'air d'admission en lui cédant des frigories. Cet air d'admission est également refroidi par le deuxième échangeur 26 air d'admission/liquide caloporteur conformément au fonctionnement décrit précédemment.

Pour réchauffer l'air d'admission, afin par exemple de régénérer le filtre à particules 19, la vanne de réglage 54 est fermée et la vanne de répartition 50 est réglée de façon à raccorder le premier échangeur thermique 22 air d'admission/liquide caloporteur au circuit 48 de liquide caloporteur chaud. Le liquide caloporteur circulant dans l'échangeur 22 réchauffe l'air d'admission en lui cédant des calories. Bien entendu, le deuxième échangeur 26 air d'admission/liquide caloporteur est désactivé.

Parmi les avantages de l'invention, on notera que le deuxième échangeur thermique 26 air d'admission/liquide caloporteur permet d'optimiser le refroidissement de l'air d'admission du moteur, notamment à la sortie d'un compresseur d'un ensemble turbo-compresseur.

Par ailleurs, les premier 22 et deuxième 26 échangeurs thermiques air d'admission/liquide caloporteur peuvent être agencés dans un même module d'une l'installation de régulation thermique de l'air d'admission, et l'échangeur thermique 46 gaz d'échappement recirculés/liquide caloporteur peut également être agencé dans ce module.

L'invention ne se limite pas aux modes de réalisation décrits ci-dessus.

En particulier, le liquide caloporteur circulant dans le deuxième échangeur thermique 26 air d'admission/liquide caloporteur et le circuit 28 de liquide caloporteur très froid peut être remplacé le cas échéant par un fluide caloporteur tel que du dioxyde de carbone CO₂ ou du Fréon circulant dans une pompe à chaleur telle que la pompe à chaleur 34.

## Revendications

1. Dispositif de régulation thermique de l'air d'admission d'un moteur à combustion interne (10) de véhicule automobile émettant des gaz d'échappement en partie recirculés, du type comprenant :
- un premier échangeur thermique (22) air d'admission/liquide caloporteur, destiné à réguler la température de l'air d'admission, raccordé à un circuit (24) de liquide caloporteur dit froid, et
- un deuxième échangeur thermique (26) air d'admission/fluide caloporteur, destiné également à réguler la température de l'air d'admission, raccordé à un circuit (28) de liquide caloporteur dit très froid, plus froid que celui du circuit (24) de liquide caloporteur froid,
**caractérisé en ce qu'**il comprend de plus un échangeur thermique (46) gaz d'échappement recirculés/liquide caloporteur raccordé en dérivation au premier échangeur thermique (22) air d'admission/liquide caloporteur.

2. Dispositif selon la revendication 1, **caractérisé en ce que** le circuit (24) de liquide caloporteur froid comprend un échangeur thermique (30) air/liquide caloporteur froid, dit échangeur basse température, porté de préférence par une face avant (31) du véhicule automobile.

3. Dispositif selon la revendication 1 ou 2, **caractérisé en ce que** le liquide caloporteur est mis en circulation dans le circuit (24) de liquide caloporteur froid par une pompe (32).

4. Dispositif selon l'une quelconque des revendications 1 à 3, **caractérisé en ce que** le fluide caloporteur circulant dans le deuxième échangeur thermique (26) air d'admission/fluide caloporteur et le circuit (28) de fluide caloporteur très froid est un liquide.

5. Dispositif selon l'une quelconque des revendications 1 à 3, **caractérisé en ce que** le fluide caloporteur circulant dans le deuxième échangeur thermique (26) air d'admission/fluide caloporteur et le circuit (28) de fluide caloporteur très froid est un fluide tel que du dioxyde de carbone CO₂ ou du Fréon destiné à circuler dans une pompe à chaleur.

6. Dispositif selon la revendication 4, **caractérisé en ce qu'**il comprend une pompe à chaleur (34), le circuit (28) de liquide caloporteur très froid étant couplé thermiquement avec une source froide (38) de la pompe à chaleur.

7. Dispositif selon l'une quelconque des revendications 1 à 6, **caractérisé en ce que** le premier échangeur thermique (22) air d'admission/liquide caloporteur et le deuxième échangeur thermique (28) air d'admission/fluide caloporteur sont agencés dans un même module.

8. Dispositif selon la revendication 7, **caractérisé en ce que** l'échangeur thermique (46) gaz d'échappement recirculés/liquide caloporteur est également agencé dans le module.

9. Dispositif selon l'une quelconque des revendications 1 à 8, **caractérisé en ce que** le premier échangeur thermique (22) air d'admission/liquide caloporteur est raccordé à un circuit (48) de liquide caloporteur dit chaud, plus chaud que celui du circuit (24) de liquide caloporteur froid, par l'intermédiaire de moyens (50 ; 54) de répartition des liquides caloporteurs froid et chaud dans le premier échangeur thermique (22) air d'admission/liquide caloporteur.

10. Dispositif selon la revendication 9, **caractérisé en ce que** le circuit de liquide caloporteur chaud (48) est raccordé à un circuit de refroidissement du moteur à combustion interne (10).

11. Dispositif selon ta revendication 9, **caractérisé en ce que** le circuit de liquide caloporteur chaud (48) est couplé thermiquement à une source chaude (40) de pompe à chaleur (34).

12. Dispositif selon l'une quelconque des revendications 9 à 11, **caractérisé en ce que** les moyens de répartition comprennent une vanne de répartition (50), à au moins trois voies, comprenant une première voie (50A) d'entrée de liquide caloporteur raccordée au circuit (24) de liquide caloporteur froid, une deuxième voie (50B) d'entrée de liquide caloporteur raccordée au circuit (48) de liquide caloporteur chaud et une troisième voie (50C) de sortie de liquide caloporteur raccordée à une entrée de liquide caloporteur dans le premier échangeur thermique (22) air d'admission/liquide caloporteur.

13. Dispositif selon la revendication 12, **caractérisé en ce que** la troisième voie (50C) de la vanne de répartition est raccordée à la fois à l'entrée de liquide caloporteur dans l'échangeur thermique (22) air d'admission/liquide caloporteur et à une entrée de liquide caloporteur dans l'échangeur thermique (46) gaz d'échappement recirculés/liquide caloporteur, par un conduit (52) commun aux circuits de liquide caloporteur froid (24) et chaud (48).

14. Dispositif selon la revendication 13, **caractérisé en ce que** les moyens de répartition comprennent une vanne (54) de réglage du débit de liquide caloporteur dans l'échangeur thermique (46) gaz d'échappement recirculés/liquide caloporteur reliant le conduit commun (52) et l'entrée de cet échangeur thermique (46) gaz d'échappement recirculés/liquide caloporteur.

15. Dispositif selon l'une quelconque des revendications précédentes **caractérisé en ce que** l'air d'admission est entraîné, à une pression supérieure à la pression atmosphérique, à travers le premier échangeur thermique (22) air d'admission/liquide caloporteur et le deuxième échangeur thermique (28) air d'admission/fluide caloporteur par un ensemble turbo-compresseur muni d'une turbine (16) entraînée par des gaz d'échappement du moteur à combustion interne (10).

16. Dispositif selon l'une quelconque des revendications précédentes, **caractérisé en ce que** le moteur à combustion interne (10), par exemple de type Diesel, est raccordé à une ligne d'échappement (14) munie d'un filtre à particules (19).

17. Dispositif selon l'une quelconque des revendications précédentes, **caractérisé en ce que** le liquide caloporteur, est un mélange d'eau et d'antigel.

18. Dispositif selon l'une quelconque des revendications précédentes, **caractérisé en ce que** le deuxième échangeur thermique (26) air d'admission/fluide caloporteur est agencé en aval du premier échangeur thermique (22) air d'admission/liquide caloporteur, en considérant le sens d'écoulement de l'air d'admission.

## Claims

1. A device for regulating the temperature of admission air for a motor vehicle internal combustion engine (10), of the type comprising:
- a first heat exchanger (22) for exchanging heat between the admission air and a heat-transfer liquid for regulating the temperature of the admission air, connected to a circuit (24) for cold heat-transfer liquid, and
- a second heat exchanger (26) for exchanging heat between the admission air and a heat-transfer fluid, likewise serving to regulate the temperature of the admission air, connected to a circuit (28) for very cold heat-transfer fluid that is colder than the heat transfer liquid of the cold heat-transfer liquid circuit (24),
**characterized in that** it further comprises a heat exchanger (46) for exchanging heat between the recycled exhaust gas and the heat-transfer liquid connected in parallel with the first heat exchanger (22) for exchanging heat between the admission air and the heat-transfer liquid.

2. A device according to claim 1, **characterized in that** the cold heat-transfer liquid circuit (24) comprises a heat exchanger (30) for exchanging heat between air and the cold heat-transfer liquid, called low temperature heat exchanger, and preferably carried on a front face (31) of the motor vehicle.

3. A device according to claim 1 or claim 2,
**characterized in that** the heat-transfer liquid is put into circulation in the cold heat-transfer liquid circuit (24) by a pump (32).

4. A device according to any one of claims 1 to 3,
**characterized in that** the heat-transfer fluid circulating both in the second heat exchanger (26) for exchanging heat between the admission air and the heat-transfer fluid and in the very cold heat-transfer fluid circuit (28) is a liquid.

5. A device according to any one of claims 1 to 3,
**characterized in that** the heat-transfer fluid circulating both in the second heat exchanger (26) for exchanging heat between the admission air and the heat-transfer fluid and in the very cold heat-transfer fluid circuit (26) is a fluid, such as carbon dioxide CO₂ or Freon, for being circulated by a heat pump.

6. A device according to claim 4, **characterized in that** it comprises a heat pump (34), the very cold heat-transfer liquid circuit (28) being thermally coupled with a cold source (38) of the heat pump.

7. A device according to any one of claims 1 to 6,
**characterized in that** the first heat exchanger (22) for exchanging heat between the admission air and the heat-transfer liquid and the second heat exchanger (26) for exchanging heat between the admission air and the heat-transfer fluid are arranged in the same module.

8. A device according to claim 7, **characterized in that** the heat exchanger (46) for exchanging heat between the recycled exhaust gas and the heat-transfer liquid is also arranged in the module.

9. A device according to any one of claims 1 to 8,
**characterized in that** the first heat exchanger (22) for exchanging heat between the admission air and the heat-transfer liquid is connected to a circuit (48) for a hot liquid, hotter than the liquid of the cold heat-transfer liquid circuit (24), the connection being via selector means (50; 54) for selecting hot or cold liquid for the first heat exchanger (22) for exchanging heat between the admission air and the heat-transfer liquid.

10. A device according to claim 9, **characterized in that** the hot heat-transfer liquid circuit (48) is connected to a circuit for cooling the internal combustion engine (10).

11. A device according to claim 9, **characterized in that** the hot heat-transfer liquid circuit (48) is thermally coupled to a hot source (40) of a heat pump (34).

12. A device according to any one of claims 9 to 11,
**characterized in that** the selector means comprise a selector valve (50) having at least three ports, comprising a first port (50A) for heat-transfer liquid inlet connected to the cold heat-transfer liquid circuit (24), a second port (50B) for heat-transfer liquid inlet connected to the hot heat-transfer liquid circuit (48), and a third port (50C) for heat-transfer liquid outlet connected to a heat-transfer liquid inlet of the first heat exchanger (22) for exchanging heat between the admission air and the heat-transfer liquid.

13. A device according to claim 12, **characterized in that** the third port (50C) of the selector valve is connected both to the heat-transfer liquid inlet of the heat exchanger (22) for exchanging heat between the admission air and the heat-transfer liquid and to a liquid inlet of the heat exchanger (46) for exchanging heat between the recycled exhaust gas and the heat-transfer liquid via a duct (52) common to the cold and the hot heat-transfer liquid circuits (24, 48).

14. A device according to claim 13, **characterized in that** the selector means include a valve (54) for controlling the flow rate of heat-transfer liquid through the heat exchanger (46) for exchanging heat between the recycled exhaust gas and the heat-transfer liquid, the valve connecting the common duct (52) to the inlet of said heat exchanger (46) for exchanging heat between recycled exhaust gas and heat-transfer liquid.

15. A device according to any preceding claim,
**characterized in that** the admission air is entrained at a pressure higher than atmospheric pressure through the first heat exchanger (22) for exchanging heat between the admission air and the heat-transfer liquid and the second heat exchanger (26) for exchanging heat between the admission air and the heat-transfer fluid by a turbocompressor unit having a turbine (16) driven by the exhaust gas from the internal combustion engine (10).

16. A device according to any preceding claim,
**characterized in that** the internal combustion engine (10), e.g. of the diesel type, is connected to an exhaust system (14) provided with a particle filter (19).

17. A device according to any preceding claim,
**characterized in that** the heat-transfer liquid is a mixture of water and antifreeze.

18. A device according to any preceding claim,
**characterized in that** the second heat exchanger (26) for exchanging heat between the admission air and the heat-transfer fluid is disposed, in the admission air flow direction, downstream from the first heat exchanger (22) for exchanging heat between the admission air and the heat-transfer liquid.

## Patentansprüche

1. Vorrichtung zur Wärmeregulierung der Ansaugluft eines Verbrennungsmotors (10) eines Kraftfahrzeugs, der zum Teil rezirkulierte Abgase abgibt, des Typs, der Folgendes umfasst:
- einen ersten Wärmeaustauscher (22) für Ansaugluft/Kühlflüssigkeit, der dazu bestimmt ist, die Temperatur der Ansaugluft zu regulieren, der an einen so genannten kalten Kühlflüssigkeitskreislauf (24) angeschlossen ist, und
- einen zweiten Wärmeaustauscher (26) für Ansaugluft/Kühlmittel, der ebenfalls zum Regulieren der Temperatur der Ansaugluft bestimmt ist, der an einen so genannten sehr kalten Kühlflüssigkeitskreislauf (28) angeschlossen ist, der kälter ist, als der kalte Kühlflüssigkeitskreislauf (24),
**dadurch gekennzeichnet, dass** sie ferner einen Wärmeaustauscher (46) für rezirkulierte Abgase/Kühlflüssigkeit umfasst, der als Abzweigung vom ersten Wärmeaustauscher (22) für Ansaugluft/Kühlflüssigkeit angeschlossen ist.

2. Vorrichtung nach Anspruch 1, **dadurch gekennzeichnet, dass** der kalte Kühlflüssigkeitskreislauf (24) einen kalten Wärmeaustauscher (30) für Luft/Kühlflüssigkeit, Niedertemperaturaustauscher genannt, umfasst, der vorzugsweise von einer Vorderseite (31) des Kraftfahrzeugs getragen wird.

3. Vorrichtung nach Anspruch 1 oder 2, **dadurch gekennzeichnet, dass** die Kühlflüssigkeit in dem kalten Kühlflüssigkeitskreislauf (24) durch eine Pumpe (32) in Umlauf gebracht wird.

4. Vorrichtung nach einem der Ansprüche 1 bis 3, **dadurch gekennzeichnet, dass** das Kühlmittel, das in dem zweiten Wärmeaustauscher (26) für Ansaugluft/Kühlmittel und dem sehr kalten Kühlmittelkreislauf (28) zirkuliert, eine Flüssigkeit ist.

5. Vorrichtung nach einem der Ansprüche 1 bis 3, **dadurch gekennzeichnet, dass** das Kühlmittel, das in dem zweiten Wärmeaustauscher (26) für Ansaugluft/Kühlmittel und dem sehr kalten Kühlmittelkreislauf (28) zirkuliert ein Fluid, wie zum Beispiel Kohlenstoffdioxid CO₂ oder Freon ist, das dazu bestimmt ist, in einer Wärmepumpe zu zirkulieren.

6. Vorrichtung nach Anspruch 4, **dadurch gekennzeichnet, dass** sie eine Wärmepumpe (34) umfasst, wobei der sehr kalte Kühlflüssigkeitskreislauf (28) thermisch mit einer Kältequelle (38) der Wärmepumpe gekoppelt ist.

7. Vorrichtung nach einem der Ansprüche 1 bis 6, **dadurch gekennzeichnet, dass** der erste Wärmeaustauscher (22) für Ansaugluft/Kühlflüssigkeit und der zweite Wärmeaustauscher (28) für Ansaugluft/Kühlmittel in einem gleichen Modul eingerichtet sind.

8. Vorrichtung nach Anspruch 7, **dadurch gekennzeichnet, dass** der Wärmeaustauscher (46) für rezirkulierte Abgase/Kühlflüssigkeit ebenfalls in dem Modul eingerichtet ist.

9. Vorrichtung nach einem der Ansprüche 1 bis 8, **dadurch gekennzeichnet, dass** der erste Wärmeaustauscher (22) für Ansaugluft/Kühlflüssigkeit an einen so genannten warmen Kühlflüssigkeitskreislauf (48), der wärmer ist als der des kalten Kühlflüssigkeitskreislaufs (24), über Mittel (50; 54) zum Verteilen der kalten und der warmen Kühlflüssigkeit in dem ersten Wärmeaustauscher (22) für Ansaugluft/Kühlflüssigkeit angeschlossen ist.

10. Vorrichtung nach Anspruch 9, **dadurch gekennzeichnet, dass** der warme Kühlflüssigkeitskreislauf (48) an einen Kühlkreislauf des Verbrennungsmotors (10) angeschlossen ist.

11. Vorrichtung nach Anspruch 9, **dadurch gekennzeichnet, dass** der warme Kühlflüssigkeitskreislauf (48) thermisch mit einer Wärmequelle (40) der Wärmepumpe (34) gekoppelt ist.

12. Vorrichtung nach einem der Ansprüche 9 bis 11, **dadurch gekennzeichnet, dass** die Verteilungsmittel ein Verteilungsventil (50) mit zumindest drei Wegen umfassen, das einen ersten Einlassweg (50A) für Kühlflüssigkeit umfasst, der an den kalten Kühlflüssigkeitskreislauf (24) angeschlossen ist, einen zweiten Einlaufweg (50B) für Kühlflüssigkeit, der an den warmen Kühlflüssigkeitskreislauf (48) angeschlossen ist, und einen dritten Ausgangsweg (50C) für Kühlflüssigkeit, der an einen Kühlflüssigkeitseinlauf in den ersten Wärmeaustauscher (22) für Ansaugluft/Kühlflüssigkeit angeschlossen ist.

13. Vorrichtung nach Anspruch 12, **dadurch gekennzeichnet, dass** der dritte Weg (50C) des Verteilungsventils gleichzeitig an den Kühlflüssigkeitseinlauf in den Wärmeaustauscher (22) für Ansaugluft/Kühlflüssigkeit und an einen Kühlflüssigkeitseinlauf in den Wärmeaustauscher (46) für rezirkulierte Abgase/Kühlflüssigkeit über eine dem kalten (24) und dem warmen (48) Kühlflüssigkeitskreislauf gemeinsame Leitung (52) angeschlossen ist.

14. Vorrichtung nach Anspruch 13, **dadurch gekennzeichnet, dass** die Verteilungsmittel ein Ventil (54) zum Regulieren des Kühlflüssigkeitsdurchsatzes in dem Wärmeaustauscher (46) für rezirkulierte Abgase/Kühlflüssigkeit umfassen, das die gemeinsame Leitung (52) und den Einlauf dieses Wärmeaustauschers (46) für rezirkulierte Abgase/Kühlflüssigkeit verbindet.

15. Vorrichtung nach einem der vorhergehenden Ansprüche, **dadurch gekennzeichnet, dass** die Ansaugluft bei einem Druck größer als dem Luftdruck durch den ersten Wärmeaustauscher (22) für Ansaugluft/Kühlflüssigkeit und den zweiten Wärmeaustauscher (28) für Ansaugluft/Kühlmittel von einer Turboladereinheit angetrieben wird, die mit einer Turbine (16) versehen ist, die von den Abgasen des Verbrennungsmotors (10) angetrieben wird.

16. Vorrichtung nach einem der vorhergehenden Ansprüche, **dadurch gekennzeichnet, dass** der Verbrennungsmotor (10) zum Beispiel des Dieselmotortyps an eine Auspuffleitung (14), die mit einem Partikelfilter (19) versehen ist, angeschlossen ist.

17. Vorrichtung nach einem der vorhergehenden Ansprüche, **dadurch gekennzeichnet, dass** die Kühlflüssigkeit ein Gemisch aus Wasser und Frostschutzmittel ist.

18. Vorrichtung nach einem der vorhergehenden Ansprüche, **dadurch gekennzeichnet, dass** der zweite Wärmeaustauscher (26) für Ansaugluft/Kühlmittel stromabwärts des ersten Wärmeaustauschers (22) für Ansaugluft/Kühlflüssigkeit angeordnet ist, wenn man die Strömungsrichtung der Ansaugluft betrachtet.
